# EUROPEAN PATENT APPLICATION

(11) **EP 1 523 168 A2**
(43) Date of publication of application: **13.04.2005**
(21) Application number: 04104660.8
(22) Date of filing: 24.09.2004
(51) Int. Cl.: H04N 1/00

(54) **Apparatus and method for scanning the pages of a book**

(30) Priority: 07.10.2003 KR 2003069722
(71) Applicant: Samsung Electronics Co., Ltd., Suwon-si, Gyeonggi-Do 442-742 (KR)
(72) Inventor: Kim, Yun-su, Gyeonggi-do (KR)
(74) Representative: Read, Matthew Charles

(57) **Abstract**

An image forming apparatus having a scanning function and an image forming method by which images of right and left pages of a book are not printed upside down when the book is scanned using the image forming apparatus. According to the image forming method, the host receives scanned image data from the image forming apparatus and stores the scanned image data. A control unit of the host determines whether a scanned image belongs to a left page or a right page of a book, and if the scanned image belongs to a right page, the scanned image is rotated 180° and the rotated image is stored in the host.

## Description

The present invention relates to a scanning system for acquiring images of the pages of a book comprising a flat bed-type scanning means and processing means and to a method of acquiring images of the pages of a book comprising scanning a series of pages of a book using flat bed-type scanning means.

Figure 1 illustrates a flatbed-type image forming apparatus 100 that includes an image scanning bed 106 and a cover 102 with an original fixing side 104.

Figure 2 is schematic view showing the scanning of a book 110 using the flatbed-type image forming apparatus 100 of Figure 1.

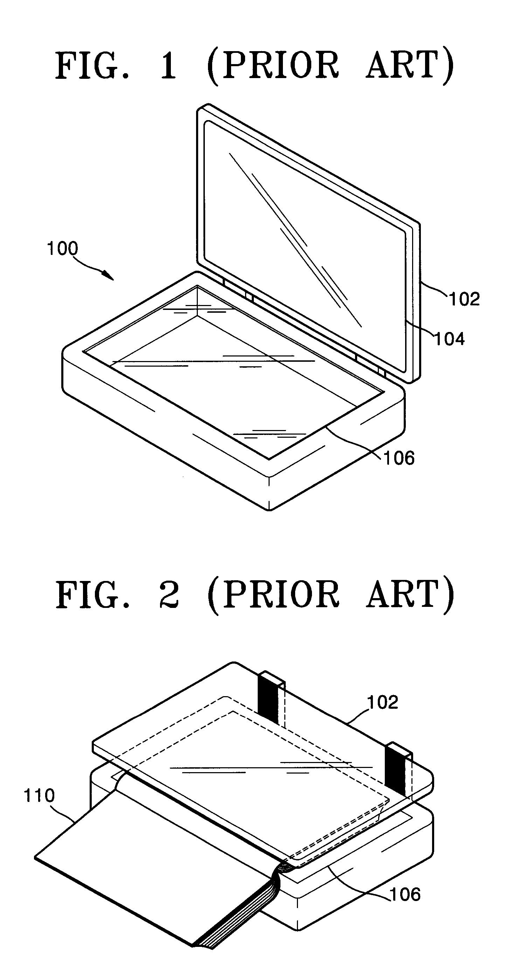

As shown in Figure 2, when a book 110 is scanned using the flatbed-type image forming apparatus 100, the book 110 has to be rotated 180° to scan a right-hand page of the book 110 after a left-hand page of the book 110 has been scanned. In this case, the scanned image of the left-hand page is displayed properly on a monitor of a PC but the scanned image of the right-hand page is displayed upside down on the monitor of the PC. Thus, to display the scanned image of the right-hand page properly, a user has to rotate the scanned image of the right-hand page through180° using an image processing function. Such a process is time consuming and causes inconvenience to the user.

US-A-6243549 discloses a conventional image forming apparatus for forming a plurality of page images on one side or both sides of a sheet of paper. This image forming apparatus allows a user to see and read a plurality of printed sheets, such as pages of a book, but does not suggest any solution to the upside-down image problem.

A system, according to the present invention, is characterised in that the processing means is configured to process image data from alternate operations of the scanning means automatically so as to rotate the image, represented by said image data, by 180°.

A user input means may be included so that the processing means can be responsive to operation of the user input means to perform said rotation selectively in respect of odd or even numbered scans in a series of scans, i.e. 1^{st}, 3^{rd}, 5^{th}, ... or 2^{nd}, 4^{th}, 6^{th}, ... scans.

The scanning means and the processing means may be comprised in a unitary apparatus. Alternatively, the scanning means and the processing means may be comprised in separate apparatuses, in which case the processing means is preferably comprised in a personal computer.

A method, according to the present invention, is characterised by processing image data from alternate operations of the scanning means automatically so as to rotate the image, represented by said image data, by 180°.

The method may comprise performing said rotation selectively in respect of odd or even numbered scans in a series of scans in dependence on a received user input.

The method may include transmitting the image data from the scanning means to a personal computer before performing said rotation by the personal computer.

Additional preferred and optional features are set forth in claims 9 to 46 appended hereto.

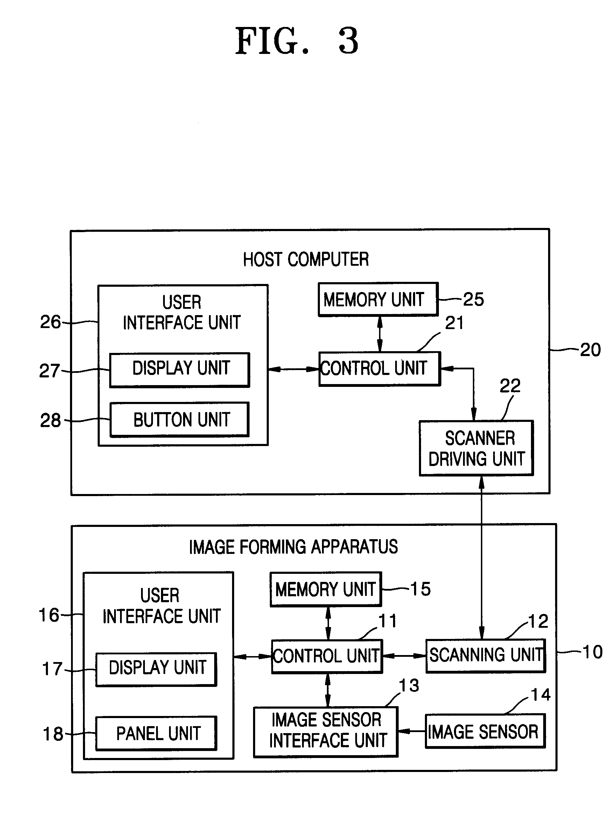

Embodiments of the present invention, will now be described, by way of example, with reference to Figures 3 to 7 of the accompanying drawings, in which:
Figure 1 illustrates a flatbed-type image forming apparatus;
Figure 2 is a schematic view showing the scanning of a book using the flatbed-type image forming apparatus of Figure 1;
Figure 3 is a block diagram of an image forming apparatus and a host computer according to the present invention;

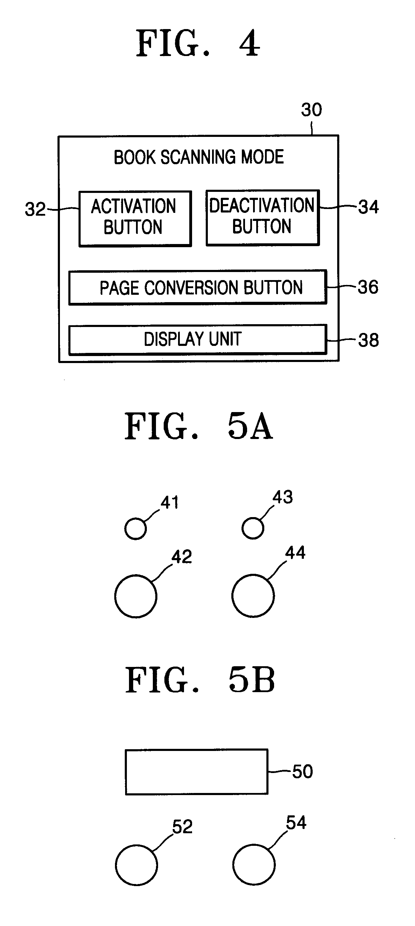

Figure 4 illustrates a book scanning mode in the host computer in Figure 3;
Figure 5A illustrates the light emitting diodes (LEDs) and keys of the image forming apparatus in Figure 3;
Figure 5B illustrates a liquid crystal display (LCD) and keys of another image forming apparatus according to the present invention;

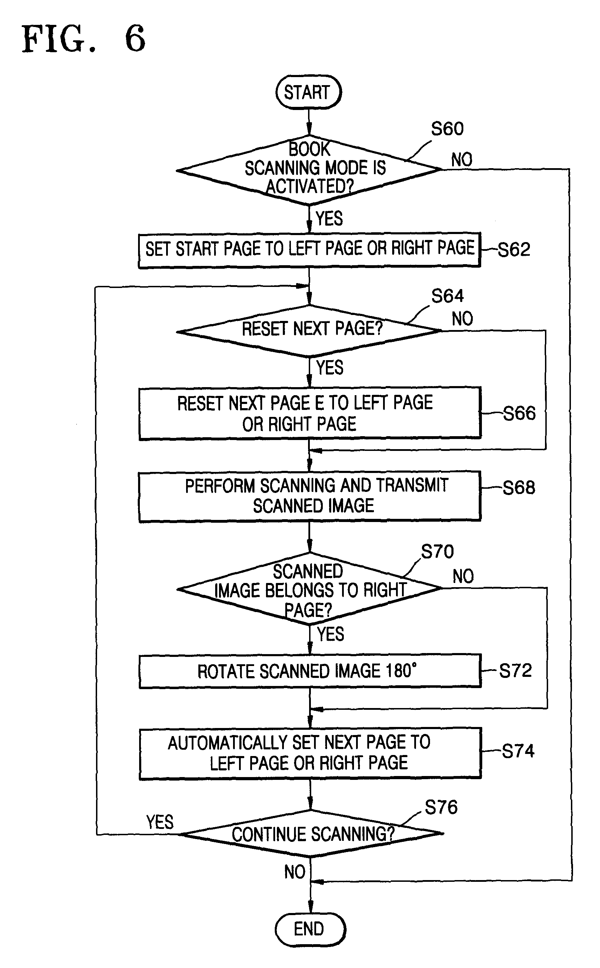

Figure 6 is a flowchart of a first image forming method according to the present invention; and

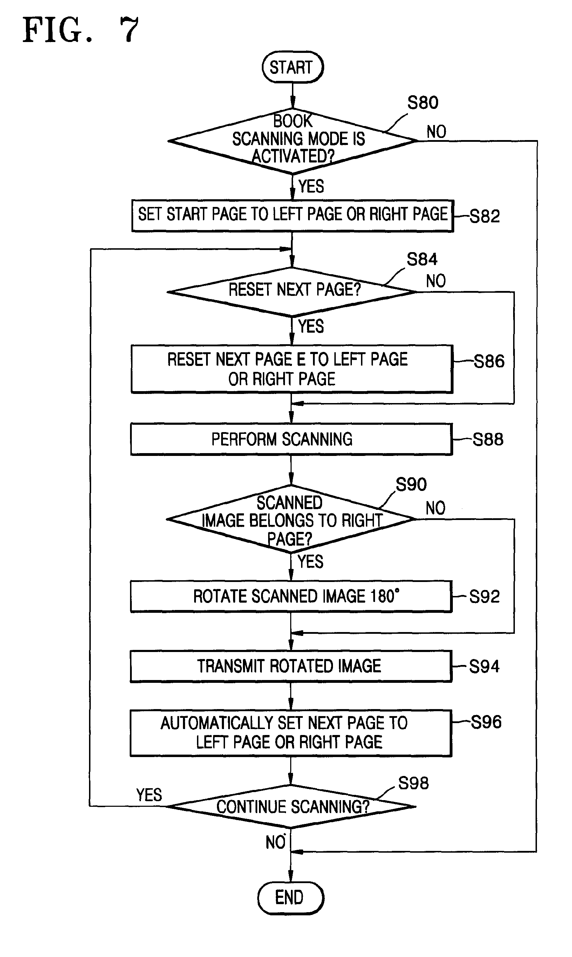

Figure 7 is a flowchart of a second image forming method according to the present invention.

Referring to Figure 3, images can be scanned and processed by an image forming apparatus 10 and a host computer 20. The image forming apparatus 10 includes a control unit 11, a scanning unit 12, an image sensor interface unit 13, an image sensor 14, a memory unit 15 and a user interface unit 16. The user interface unit 16 includes a display unit 17 and a panel unit 18.

The control unit 11 controls the image forming apparatus 10 according to a stored program. The image forming apparatus 10 can be any number of devices, such as a scanner or a multifunction device. Multifunction devices combine the functions of a scanner, a printer, and a copier. The control unit 11 determines an image orientation issue, for example (but not limited to), whether a scanned image belongs to a left-hand page or a right-hand page of a book. If the scanned image belongs to a right-hand page of a book, the control unit 11 rotates the scanned image (by, for example, 180°) and stores the rotated image in the memory unit 15. In this example, the scanned image of a left-hand page would conventionally have been displayed properly on a monitor (not shown) of the host computer 20, and the scanned image of the right page would conventionally have been displayed upside down.

The memory unit 15 stores scanned image data, an operating program and a general control program of the control unit 10. The scanned image data is stored by the execution of an operating program and the general control program of the control unit 10.

The image sensor interface unit 13 processes signals from the image sensor 14 to produce the image data that is then transmitted to the control unit 11.

The scanning unit 12 receives scanning commands from the host computer 20 and transmits the image data, stored in the memory unit 15, to the host computer 20.

The display unit 17 includes a first LED (for example, 41 of Figure 5A) and a second LED (for example, 43 of Figure 5A), or an LCD (for example, 50 of Figure 5B). The first LED 41 indicates whether a book scanning mode is activated. For example, if the first LED 41 is turned on, the book scanning mode is activated and, if the first LED 41 is turned off, the book scanning mode is deactivated. The second LED 43 indicates whether the next page to be scanned is a left-hand page or a right-hand page. For example, if the second LED 43 is turned on, the left-hand page is to be scanned and, if the second LED 43 is turned off, the right-hand page is to be scanned. The LCD 50 of Figure 5B can have the functions of both the first LED 41 and the second LED 43.

The panel unit 18 includes keys (for example, 42 and 44 of Figure 5A), or keys (for example, 52 and 54 of Figure 5B). By using the keys 42 or 52, activation of the book scanning mode can be effected. The control unit 11 rotates the scanned image of right-hand pages by 180° and stores the rotated image only when the book scanning mode is activated. By using the keys 44 or 54, a start page can be identified as either a left-hand page or a right-hand page. Also, through the use of keys 44 or 54, the next page to be scanned can be identified as either a left-hand page or a right-hand page. For example, if a page does not need to be scanned or a page to be scanned is an empty page, whether the next page is left- or right-handed may need to be entered using the keys 44 or 54.

Referring again to Figure 3, the host computer 20 is connected to the image forming apparatus 10. The host computer 20 includes a control unit 21, a scanner driving unit 22, a memory unit 25, and a user interface unit 26. The user interface unit 26 includes a display unit 27 and a button unit 28.

The scanner driving unit 22 receives the scanned image data from the scanning unit 12 of the image forming apparatus 10. The memory unit 25 stores the scanned image data. The control unit 21 determines whether the scanned image belongs to a left-hand page or a right-hand page. If the scanned image belongs to a right-hand page, the control unit 21 rotates the scanned image by 180° and stores the rotated image in the memory unit 25.

The user interface unit 26 is described in greater detail below with reference to Figure 4.

Referring to Figure 4, the user interface unit 26 generates a dialog box 30 that illustrates the book scanning mode in the host computer 20 of Figure 3.

The dialogue box 30 includes an activation button 32 and a deactivation button 34 for activating and deactivating the book scanning mode respectively. The control unit 21 rotates the scanned image of right-hand pages by 180° and then stores the rotated images only when the book scanning mode is activated.

The dialog box 30 also includes a page conversion button 36, by means of which the start page can be identified as a left-hand page or a right-hand page. Also, the next page to be scanned can be identified as a left-hand page or a right-hand page using the page conversion button 36. For example, if the next page does not need to be scanned or a page to be scanned is empty, resetting may be required.

The dialog box 30 also includes a label widget (display unit) 38 that indicates whether the next page to be scanned is a left-hand page or a right-hand page. Thus, a user can refer to the next page to be scanned that is indicated by the display unit 38, or can identify the next page to be scanned as a left-hand page or a right-hand page, if necessary.

Referring to Figure 6, in a first image forming method according to the present invention, a control unit (for example, 21 of Figure 3) of a host computer (for example, 20 of Figure 3) rotates a scanned image of a right-hand page by 180° and stores the rotated image in a memory unit (for example, 25 of Figure 3).

Referring to Figure 7, in a second image forming method according to the present invention, a control unit (for example, 11 of Figure 3) of an image forming apparatus (for example, 10 of Figure 3) rotates a scanned image of a right-hand page by 180°, stores the rotated image in a memory unit (for example, 15 of Figure 3), and then transmits the stored image to the host computer (for example, 20 of Figure 3).

The first image forming method will now be described with reference to Figure 6.

In step S60, a control unit (for example, 21 of Figure 3) of a host computer (for example, 20 of Figure 3) determines whether a book scanning mode is activated. If the book scanning mode is deactivated, the process is terminated. If the book scanning mode is activated, the process proceeds to step S62. In step S62, a start page is set to either a left-hand page or a right-hand page using a button unit (for example, 28 of Figure 3) of the host computer.

In step S64, it is then determined whether to reset the next page to be scanned to either a left-hand page or a right-hand page. For example, if the next page does not need to be scanned or a page to be scanned is empty, resetting may be required. If resetting is required, the process proceeds to step S66. In step S66, the next page to be scanned is reset to either a left-hand page or a right-hand page and the process proceeds to step S68. If resetting is not required in step S64, the process also proceeds to step S68. In step S68, scanning is performed by an image forming apparatus (for example, 10 of Figure 3) and scanned image data is transmitted to the host computer. The host computer receives the scanned image data from the image forming apparatus and stores the received scanned image data in a memory unit (for example, 25 of Figure 3).

In step S70, it is then determined whether the scanned image belongs to either a left-hand page or a right-hand page. If the scanned image belongs to a left page, the process proceeds to step S74. If the scanned image belongs to a right-hand page, the process proceeds to step S72. In step S72, the scanned image is rotated 180° and stored. Thus, the scanned image of a right-hand page is not upside down when subsequently viewed.

In step S74, the control unit of the host computer automatically sets the next page to be scanned to either a left-hand page or a right-hand page based on the current page. For example, if the current page is a left-hand page, the next page to be scanned is assumed to be a right-hand page. As such, since the next page to be scanned is automatically set after the scanned image of the current page is created, the user can scan the next page more quickly and conveniently.

In step S76, it is determined whether scanning of the book is to continue. If the book will continue to be scanned, the process proceeds to step S64. If the book is not to be scanned further, the process is terminated.

The second image forming method will now be described with reference to Figure 7.

In step S80, a control unit (for example, 11 of Figure 3) of an image forming apparatus (for example, 10 of Figure 3) determines whether the book scanning mode is activated. If the book scanning mode is deactivated, the process is terminated. If the book scanning mode is activated, the process proceeds to step S82. In step S82, a start page is identified as being either a left-hand page or a right-hand page using a panel unit (for example, 18 of Figure 3) of the image forming apparatus.

In step S84, it is then determined whether to reset the next page to be scanned to either a left page or a right page. For example, if a next page does not need to be scanned or a page to be scanned is empty, resetting may be required. If resetting is required, the process proceeds to step S86. After the next page to be scanned is reset to a left-hand page or a right-hand page in step S86, the process proceeds to step S88. If resetting is not required in step S84, the process also proceeds to step S88. In step S88, the image forming apparatus performs a scanning operation.

In step S90, a control unit (for example, 11 of Figure 3) of the image forming apparatus determines whether the scanned image belongs to either a left-hand page or a right-hand page. If the scanned image belongs to a left-hand page, the process proceeds to step S94. If the scanned image belongs to a right-hand page, the process proceeds to step S92. In step S92, the scanned image is rotated by 180° and stored. Thus, the scanned image of a right page is not upside down when subsequently viewed. In step S94, the stored image data is transmitted to a host computer.

In step S96, the control unit of the image forming apparatus automatically resets the next page to be scanned to either a left-hand page or a right-hand page. For example, if a current page is a left-hand page, the next page to be scanned is assumed to be a right-hand page. As such, since the next page to be scanned is automatically set after the scanned image of the current page is created, the user can quickly and conveniently scan the next page.

In step S98, it is then determined whether to continue scanning the book. If the book will continue to be scanned, the process proceeds to step S84. If the book will not be scanned further, the process is terminated.

According to the image forming method of Figure 7, after a scanned image is stored in the memory unit of the image forming apparatus, the scanned image of the right page is rotated 180° and stored in the memory unit. Alternatively, before a scanned image is stored in the memory unit of the image forming apparatus, it can be determined whether the scanned image belongs to a right page. If the scanned image belongs to a right page, the scanned image can be stored in the opposite order in the memory unit of the image forming apparatus. In doing so, the same effects as the above-described effects can be obtained.

As described in the above exemplary embodiments of the present invention, it is possible to obtain a scanned image that is not upside down in a flatbed-type image forming apparatus. Thus, a user does not need to rotate the scanned image by using a predetermined image processing function, thereby avoiding a time-consuming process and related inconveniences.

Also, since the next page to be scanned is automatically reset to either a left-hand page or a right-hand page after a current page is scanned, the user can quickly and conveniently continue to scan the next page.

While scanning a book, if a page does not need to be scanned, or a page to be scanned is empty, the next page to be scanned can be manually reset to either a left-hand page or a right-hand page by using a page conversion button or key.

## Claims

1. A scanning system for acquiring images of the pages of a book, the apparatus comprising a flat bed-type scanning means (12, 14) and processing means (11; 21), **characterised in that** the processing means (11; 21) is configured to process image data from alternate operations of the scanning means (12, 14) automatically so as to rotate the image, represented by said image data, by 180°.

2. An system according to 1, including user input means (18; 28), wherein the processing means (11; 21) is responsive to operation of the user input means (18; 28) to perform said rotation selectively in respect of odd or even numbered scans in a series of scans.

3. A system according to claim 1 or 2, wherein the scanning means (12, 14) and the processing means (11) are comprised in a unitary apparatus (10).

4. A system according to claim 1 or 2, wherein the scanning means (12, 14) and the processing means (21) are comprised in separate apparatuses (10, 20).

5. A system according to claim 4, wherein the processing means (21) is comprised in a personal computer (20).

6. A method of acquiring images of the pages of a book, the method comprising scanning a series of pages of a book using flat bed-type scanning means (12, 14), **characterised by** processing image data from alternate operations of the scanning means (12, 14) automatically so as to rotate the image, represented by said image data, by 180°.

7. A method according to 6, comprising performing said rotation selectively in respect of odd or even numbered scans in a series of scans in dependence on a received user input.

8. A method according to claim 6 or 7, including transmitting the image data from the scanning means (12, 14) to a personal computer (20) before performing said rotation, wherein said rotation is performed by the personal computer (20).

9. An image forming method performed by an image forming apparatus having a scanning function and connected to a host, the image forming method comprising the steps of:
receiving scanned image data from the image forming apparatus and storing the scanned image data;
determining whether a scanned image belongs to a left page or a right page of a book; and
rotating the scanned image and storing the rotated image if the scanned image belongs to the right page.

10. The image forming method of claim 9, further comprising the step of:
determining whether a book scanning mode is activated, wherein if the book scanning mode is activated the rotation is performed, and if the book scanning mode is deactivated the rotation is not performed.

11. The image forming method of claim 9, further comprising the step of setting a start page to the left page or the right page.

12. The image forming method of claim 9, further comprising the step of resetting a next page to be scanned to the left page or the right page.

13. The image forming method of claim 9, further comprising the step of: automatically setting a next page to be scanned to the left page or the right page based on a current page if the host completes scanning of the current page.

14. An image forming method performed by an image forming apparatus having a scanning function and connected to a host, the image forming method comprising:
scanning an image and storing the scanned image;
determining whether the scanned image belongs to a left page or a right page of a book; and
rotating the scanned image and storing the rotated image if the scanned image belongs to the right page.

15. The image forming method of claim 14, further comprising the step of transmitting the stored image to the host after the rotation is performed.

16. The image forming method of claim 14, further comprising the step of: determining whether a book scanning mode is activated, wherein if the book scanned mode is activated the rotation is performed, and if the book scanned mode is deactivated the rotation is not performed.

17. The image forming method of claim 14, further comprising the step of setting a start page to the left page or the right page.

18. The image forming method of claim 14, further comprising the step of resetting a next page to be scanned to the left page or the right page.

19. The image forming method of claim 14, further comprising the step of: automatically setting a next page to be scanned to the left page or the right page based on a current page if the image forming apparatus completes scanning of the current page.

20. A host connected to an image forming apparatus having a scanning function, the host comprising:
a scanner driving unit which receives scanned image data from the image forming apparatus;
a memory unit which stores the scanned image data; and a control unit which determines whether a scanned image belongs to a left page or a right page of a book, and rotates the scanned image and stores the rotated image in the memory unit if the scanned image belongs to a right page.

21. The host of claim 20, further comprising a user interface unit which determines whether a book scanning mode is activated, wherein the control unit rotates a scanned image of the right page and stores the rotated image of the right page if the book scanning mode is activated.

22. The host of claim 21, wherein the user interface unit comprises a unit to set a start page to the left page or the right page.

23. The host of claim 21, wherein the user interface unit comprises a unit to reset a next page to be scanned to the left page or the right page.

24. The host of claim 21, wherein the user interface unit comprises a display unit that indicates whether a next page to be scanned is the left page or the right page.

25. The host of claim 20, wherein the control unit automatically sets a next page to be scanned to the left page or the right page based on the current page if the host completes scanning of a current page.

26. An image forming apparatus having a scanning function and connected to a host, the image forming apparatus comprising:
a scanning unit which scans an image;
a memory unit which stores scanned image data; and
a control unit which determines whether a scanned image belongs to a left page or a right page of a book and rotates the scanned image and stores the rotated image in the memory unit if the scanned image belongs to the right page.

27. The image forming apparatus of claim 26, wherein the apparatus further transmits the stored image to the host.

28. The image forming apparatus of claim 26, further comprising a user interface unit which determines whether a book scanning mode is activated, wherein the control unit rotates a scanned image of the right page and stores the rotated image of the right page if the book scanning mode is activated.

29. The image forming apparatus of claim 28, wherein the user interface unit comprises a unit to set a start page to the left page or the right page.

30. The image forming apparatus of claim 28, wherein the user interface unit comprises a unit to reset a next page to be scanned to the left page or the right page.

31. The image forming apparatus of claim 28, wherein the user interface unit comprises a display unit that indicates whether a next page to be scanned belongs to a left page or a right page.

32. The image forming apparatus of claim 26, wherein the control unit automatically sets a next page to be scanned to the left page or the right page based on the current page if the image forming apparatus completes scanning of a current page.

33. The image forming method of claim 10, further comprising the step of setting a start page to the left page or the right page.

34. The image forming method of claim 10, further comprising the step of resetting a next page to be scanned to the left page or the right page.

35. The image forming method of claim 10, further comprising the step of: automatically setting a next page to be scanned to the left page or the right page based on a current page if the host completes scanning of the current page.

36. The image forming method of claim 15, further comprising the step of: determining whether a book scanning mode is activated, wherein if the book scanned mode is activated the rotation is performed, and if the book scanned mode is deactivated the rotation is not performed.

37. The image forming method of claim 15, further comprising the step of setting a start page to the left page or the right page.

38. The image forming method of claim 15, further comprising the step of resetting a next page to be scanned to the left page or the right page.

39. The image forming method of claim 15, further comprising the step of: automatically setting a next page to be scanned to the left page or the right page based on a current page if the image forming apparatus completes scanning of the current page.

40. The host of claim 21, wherein the control unit automatically sets a next page to be scanned to the left page or the right page based on the current page if the host completes scanning of a current page.

41. The image forming apparatus of claim 27, further comprising a user interface unit which determines whether a book scanning mode is activated, wherein the control unit rotates a scanned image of the right page and stores the rotated image of the right page if the book scanning mode is activated.

42. The image forming apparatus of claim 27, wherein the control unit automatically sets a next page to be scanned to the left page or the right page based on the current page if the image forming apparatus completes scanning of a current page.

43. The image forming method of claim 9, wherein the scanned image is rotated substantially 180°.

44. The image forming method of claim 14, wherein the scanned image is rotated substantially 180°.

45. The host of claim 20, wherein the scanned image is rotated substantially 180°.

46. The image forming apparatus of claim 26, wherein the scanned image is rotated substantially 180°.
